# EUROPEAN PATENT APPLICATION

(11) **EP 4 797 019 A1**
(43) Date of publication of application: **26.08.2026**
(21) Application number: 24878828.3
(22) Date of filing: 27.09.2024
(51) Int. Cl.: G05B 23/02

(54) **VEHICLE-MOUNTED CONTROLLER DIAGNOSIS METHOD AND SYSTEM, ELECTRONIC APPARATUS, VEHICLE, AND STORAGE MEDIUM**

(30) Priority: 19.10.2023 CN 202311375687
(71) Applicant: BYD Company Limited, Shenzhen, Guangdong 518118 (CN)
(72) Inventor: HAN, Bing, Shenzhen, Guangdong 518118 (CN); LIN, Guizhang, Shenzhen, Guangdong 518118 (CN); XU, Yawen, Shenzhen, Guangdong 518118 (CN); FAN, Huihui, Shenzhen, Guangdong 518118 (CN); ZHAO, Hongbo, Shenzhen, Guangdong 518118 (CN)
(74) Representative: Mathys & Squire
(86) International application number: PCT/CN2024/121683
(87) International publication number: WO 2025/082182

(57) **Abstract**

An in-vehicle controller diagnostic method and system, an electronic apparatus, a vehicle, and a storage medium are provided. The method is applied to a master controller and includes: obtaining at least one type of information, where the at least one type of information includes at least one of the following: first packet data or at least one piece of second packet data, the first packet data is packet data generated by the master controller, and the at least one piece of second packet data is packet data received by the master controller from at least one sub-controller; and generating diagnostic data based on the at least one type of information when a target condition is met.

## Description

This application claims priority to Chinese Patent Application No. 202311375687.2, filed with the China National Intellectual Property Administration on October 19, 2023 and entitled "IN-VEHICLE CONTROLLER DIAGNOSTIC METHOD AND RELATED APPARATUS", which is incorporated herein by reference in its entirety.

### TECHNICAL FIELD

This application relates to the field of automotive electronic technologies, and in particular, to an in-vehicle controller diagnostic method and system, an electronic apparatus, a vehicle, and a storage medium.

### BACKGROUND

Currently, an in-vehicle controller basically provides a diagnostic service while implementing unified diagnostic services (UDS) diagnostic protocol stack. In addition, a diagnostic layer needs to be designed in each in-vehicle controller regardless of whether the in-vehicle controller is connected to a bus or an internal network. In addition to having a controller area network (CAN) communication service, a current electronic control unit (ECU) controller further needs to be designed with a UDS diagnostic service layer. In this case, regardless of whether the UDS diagnostic protocol stack is developed by using an AutoSAR standard, a series of code development needs to be performed for a bottom layer, a midware, and an application layer. Consequently, this causes a relatively long development cycle and relatively low development efficiency.

### SUMMARY

Embodiments of this application provide an in-vehicle controller diagnostic method and system, an electronic apparatus, a vehicle, and a storage medium. A master controller interacts with another sub-controller through an internal network, and when a target condition is met, the master controller generates diagnostic data based on data of the master controller and interaction data. In this way, required diagnostic data can be obtained by merely using the master controller, that is, only unified diagnostic services (UDS) need to be developed for the master controller. This avoids UDS development for each controller, thereby shortening a development cycle and improving development efficiency.

According to a first aspect, an embodiment of this application provides an in-vehicle controller diagnostic method, and the method is applied to a master controller. The method includes:
obtaining at least one type of information, wherein the at least one type of information includes at least one of the following: first packet data or at least one piece of second packet data, the first packet data being packet data generated by the master controller, and the at least one piece of second packet data being packet data received by the master controller from at least one sub-controller; and
generating diagnostic data based on the at least one type of information when a target condition is met.

It will be understood that in this embodiment of this application, the master controller generates the diagnostic data based on the first packet data generated by the master controller and the second packet data sent by the at least one sub-controller, so that if a diagnostic service needs to be performed on controllers of an entire vehicle, the diagnostic service can be implemented on the controllers of the entire vehicle by merely interacting with the master controller. That is, unlike a conventional method in which a diagnostic service needs to be performed with each controller by using a UDS diagnostic protocol, a UDS diagnostic service only needs to be performed with the master controller. In addition, the master controller performs interactive control with the at least one sub-controller, and there is no need to independently develop each in-vehicle controller. Therefore, this process avoids problems of a relatively long development cycle and relatively low development efficiency that may be caused by developing a UDS diagnostic service for each controller, thereby improving development efficiency of the controllers of the entire vehicle.

In some embodiments, that the target condition is met includes: receiving a diagnostic request from a diagnostic device; and after generating the diagnostic data based on the at least one type of information, the method further includes: sending the diagnostic data to the diagnostic device.

In this embodiment of the application, according to the foregoing method, the diagnostic service may be implemented on the in-vehicle controller.

In some embodiments, the diagnostic request includes one or more of a data reading request, a fault code information reading request, a diagnostic information clearing request, an input/output control request, a data calibration request, and a routine control request.

In this embodiment of the application, a complete diagnostic service may be implemented on an in-vehicle controller by determining the diagnostic request.

In some embodiments, when the diagnostic request is the data reading request, the at least one piece of second packet data is data sent by the at least one sub-controller to the master controller based on a first preset cycle, and the first packet data is data determined by the master controller based on the first preset cycle.

In this embodiment of the application, the data sent to the master controller based on the first preset cycle not only can implement a diagnostic service for data reading, but also can improve data reading efficiency.

In some embodiments, when the diagnostic request is the fault code information reading request, the at least one piece of second packet data includes fault code information sent to the master controller when a target sub-controller is faulty, the target sub-controller is a controller in the at least one sub-controller, and the first packet data is fault code information generated when the master controller is faulty.

In this embodiment of this application, the fault code information sent to the master controller when the sub-controller is faulty not only can implement a diagnostic service for fault code information reading, but also can improve fault code information reading efficiency.

In some embodiments, when the diagnostic request is the diagnostic information clearing request, the at least one piece of second packet data is clearing result feedback data that corresponds to the diagnostic information clearing request and that is returned to the master controller after the at least one sub-controller receives an execution instruction that corresponds to the diagnostic information clearing request and that is sent by the diagnostic device and forwarded by the master controller, and the first packet data is clearing result feedback data generated by the master controller based on the diagnostic information clearing request.

In this embodiment of the application, according to the foregoing method, a diagnostic service for diagnostic information clearing may be implemented.

In some embodiments, the execution instruction corresponding to the diagnostic information clearing request includes a packet identifier corresponding to the diagnostic information clearing request.

In this embodiment of the application, according to the foregoing method, simplicity of communication is improved when the diagnostic service corresponding to diagnostic information clearing is implemented between the master controller and the sub-controller.

In some embodiments, when the diagnostic request is the input/output control request, the at least one piece of second packet data is execution result feedback data that corresponds to the input/output control request and that is returned to the master controller after the at least one sub-controller receives an execution instruction that corresponds to the input/output control request and that is sent by the diagnostic device and forwarded by the master controller, and the first packet data is execution result feedback data generated by the master controller based on the input/output control request.

In this embodiment of the application, according to the foregoing method, a diagnostic service for input/output control may be implemented.

In some embodiments, the execution instruction corresponding to the input/output control request includes a packet identifier corresponding to the input/output control request.

In this embodiment of the application, according to the foregoing method, simplicity of communication is improved when the diagnostic service corresponding to input/output control is implemented between the master controller and the sub-controller.

In some embodiments, when the diagnostic request is the data calibration request, the at least one piece of second packet data is execution result feedback data that corresponds to the data calibration request and that is returned to the master controller after the at least one sub-controller receives an execution instruction that corresponds to the data calibration request and that is sent by the diagnostic device and forwarded by the master controller, and the first packet data is execution result feedback data generated by the master controller based on the data calibration request.

In this embodiment of the application, according to the foregoing method, a diagnostic service for data calibration may be implemented.

In some embodiments, the execution instruction corresponding to the data calibration request includes a packet identifier corresponding to the data calibration request.

In this embodiment of this application, according to the foregoing method, simplicity of communication is improved when the diagnostic service corresponding to data calibration is implemented between the master controller and the sub-controller.

In some embodiments, when the diagnostic request is the routine control request, the at least one piece of second packet data is execution result feedback data that corresponds to the routine control request and that is returned to the master controller after the at least one sub-controller receives an execution instruction that corresponds to the routine control request and that is sent by the diagnostic device and forwarded by the master controller, and the first packet data is execution result feedback data generated by the master controller based on the routine control request.

In this embodiment of the application, according to the foregoing method, a diagnostic service for routine control may be implemented.

In some embodiments, the execution instruction corresponding to the routine control request includes a packet identifier corresponding to the routine control request.

In this embodiment of the application, according to the foregoing method, simplicity of communication is improved when the diagnostic service corresponding to routine control is implemented between the master controller and the sub-controller.

In some embodiments, the master controller and the at least one sub-controller are located in the same network segment.

In this embodiment of the application, the master controller and the at least one sub-controller are located in the same network segment, so that the master controller can perform interactive control with the at least one sub-controller through an internal network, and there is no need to independently develop each in-vehicle controller. Therefore, this process avoids problems of a relatively long development cycle and relatively low development efficiency that may be caused by developing a UDS diagnostic service for each controller.

In some embodiments, the first packet data and the at least one piece of second packet data include different software and hardware version information and different packet identifiers of a dynamic data stream.

In this embodiment of the application, different software and hardware version information and different packet identifiers of a dynamic data stream are set to improve efficiency of generating diagnostic data.

According to a second aspect, an embodiment of this application provides an in-vehicle controller diagnostic apparatus. The apparatus is applied to a master controller, and the apparatus includes an obtaining unit and a generation unit.

The obtaining unit is configured to obtain at least one type of information. The at least one type of information includes at least one of the following: first packet data or at least one piece of second packet data, the first packet data being packet data generated by the master controller, and the at least one piece of second packet data being packet data received by the master controller from at least one sub-controller.

The generation unit is configured to generate diagnostic data based on the at least one type of information when a target condition is met.

According to a third aspect, an embodiment of this application provides an in-vehicle controller diagnostic system. The system includes a diagnostic device, a master controller, and at least one sub-controller.

The at least one sub-controller is configured to send at least one piece of second packet data to the master controller.

The master controller is configured to obtain at least one type of information. The at least one type of information includes at least one of the following: first packet data or the at least one piece of second packet data, and the first packet data is generated by the master controller.

The diagnostic device is configured to send a diagnostic request to the master controller.

The master controller is further configured to generate diagnostic data based on the at least one type of information when receiving the diagnostic request.

The master controller is further configured to send the diagnostic data to the diagnostic device.

According to a fourth aspect, an embodiment of this application provides an electronic apparatus. The apparatus includes a processor, and the processor is coupled to a memory. The processor invokes executable program code stored in the memory to perform, for example, some or all of the operations described in any method according to the first aspect.

According to a fifth aspect, an embodiment of this application provides a vehicle. The vehicle includes the electronic apparatus shown in the fourth aspect in the embodiments.

According to a sixth aspect, an embodiment of this application provides a computer-readable storage medium. The computer-readable storage medium stores electronic data. The electronic data is executed by a processor to perform some or all of the operations described in the first aspect in the embodiments of this application.

According to a seventh aspect, an embodiment of this application provides a computer program product. The computer program product includes a non-transitory computer-readable storage medium that stores a computer program, and the computer program may be operated to enable a computer to perform some or all of the operations described in the first aspect in the embodiments of this application. The computer program product may be a software installation package.

### BRIEF DESCRIPTION OF DRAWINGS

To describe the technical solutions in embodiments of this application or the conventional technology more clearly, the following briefly describes the accompanying drawings required for describing the embodiments or the conventional technology. Clearly, the accompanying drawings in the following description show merely some embodiments of this application, and a person of ordinary skill in the art may still derive other drawings from these accompanying drawings without creative efforts.
FIG. 1 is a schematic diagram of a structure of a diagnostic service architecture for implementing unified diagnostic services (UDS);
FIG. 2 is a schematic diagram of a structure of an in-vehicle controller diagnostic system according to an embodiment of this application;
FIG. 3 is a schematic flowchart of an in-vehicle controller diagnostic method according to an embodiment of this application;
FIG. 4 is a schematic flowchart of an in-vehicle controller diagnostic method according to another embodiment of this application;
FIG. 5A is a schematic flowchart of service interaction for a data reading request according to an embodiment of this application;
FIG. 5B is a design matrix diagram of application data for a data reading request according to an embodiment of this application;
FIG. 6 is a schematic flowchart of an in-vehicle controller diagnostic method according to another embodiment of this application;
FIG. 7 is a schematic flowchart of an in-vehicle controller diagnostic method according to another embodiment of this application;
FIG. 8A is a schematic flowchart of service interaction for a fault code information reading/clearing request according to an embodiment of this application;
FIG. 8B is a design matrix diagram of application data for a fault code information reading/clearing request according to an embodiment of this application;
FIG. 9 is a schematic flowchart of an in-vehicle controller diagnostic method according to another embodiment of this application;
FIG. 10A is a schematic flowchart of service interaction for an input/output control request according to an embodiment of this application;
FIG. 10B is a design matrix diagram of application data for an input/output control request according to an embodiment of this application;
FIG. 11 is a schematic flowchart of an in-vehicle controller diagnostic method according to another embodiment of this application;
FIG. 12A is a schematic flowchart of service interaction for a data calibration request according to an embodiment of this application;
FIG. 12B is a design matrix diagram of application data for a data calibration request according to an embodiment of this application;
FIG. 13 is a schematic flowchart of an in-vehicle controller diagnostic method according to another embodiment of this application;
FIG. 14A is a schematic flowchart of service interaction for a routine control request according to an embodiment of this application;
FIG. 14B is a design matrix diagram of application data for a routine control request according to an embodiment of this application;
FIG. 15A is a block diagram of functional unit composition of an in-vehicle controller diagnostic apparatus according to an embodiment of this application;
FIG. 15B is a block diagram of functional unit composition of an in-vehicle controller diagnostic apparatus according to another embodiment of this application;
FIG. 16 is a block diagram of a structure of an electronic apparatus according to an embodiment of this application; and
FIG. 17 is a schematic diagram of a structure of a vehicle according to an embodiment of this application.

### DESCRIPTION OF EMBODIMENTS

To enable a person skilled in the art to better understand the solutions in this application, the technical solutions in the embodiments of this application are clearly and completely described below with reference to the accompanying drawings in the embodiments of this application. Clearly, the described embodiments are merely some rather than all of the embodiments of this application. Based on the embodiments of this application, all other embodiments obtained by a person of ordinary skill in the art without creative efforts fall within the protection scope of this application.

The terms "first", "second", and the like in the specification, claims, and accompanying drawings of this application are used to distinguish between different objects, and are not used to describe a specific sequence. In addition, the terms "comprise", "include", and any variations thereof are intended to cover non-exclusive inclusion. For example, a process, a method, a system, a product, or a device that includes a series of operations is not limited to listed operations, but optionally further includes an operation that is not listed, or optionally further includes another operation inherent to the process, the method, the product, or the device.

Referring to "embodiments" in this specification means that specific features, structures, or features described with reference to the embodiments may be included in at least one embodiment of this application. The phrases appear at various locations in the specification do not necessarily refer to a same embodiment, and are not separate or alternative embodiments mutually exclusive with another embodiment. A person skilled in the art explicitly and implicitly understands that the embodiments described in this specification may be combined with other embodiments.

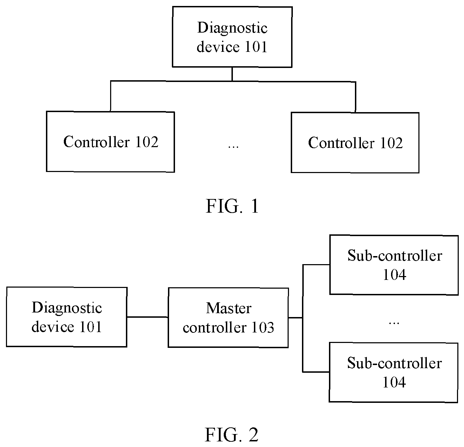

The following describes a related technology with reference to FIG. 1.

FIG. 1 is a schematic diagram of a structure of a diagnostic service architecture for implementing unified diagnostic services (UDS). As shown in FIG. 1, a diagnostic device 101 is configured to implement the UDS for controllers 102 of an entire vehicle. If the UDS needs to be implemented for the entire vehicle, UDS development needs to be performed for the controllers 102 of the entire vehicle. Therefore, the diagnostic device 101 separately performs the UDS for the controllers 102 of the entire vehicle. In addition, the current controller 102 has a controller area network (CAN) communication service. If UDS development needs to be performed for the controllers 102 of the entire vehicle, UDS of each controller 102 needs to occupy a CAN identifier. Because there are increasingly more vehicle systems, resources of diagnostic identifiers become fewer.

The following describes the embodiments of this application with reference to FIG. 2.

FIG. 2 is a schematic diagram of a structure of an in-vehicle controller diagnostic system according to an embodiment of this application. As shown in FIG. 2, the in-vehicle controller diagnostic system includes a diagnostic device 101, a master controller 103, and at least one sub-controller 104.

In this application, controllers of an entire vehicle are classified into the master controller 103 and the at least one sub-controller 104. The master controller 103 is a controller that is selected from the controllers of the entire vehicle and that is used to implement UDS with the diagnostic device 101. The master controller 103 and the at least one sub-controller 104 are located in a same network segment, and each of the at least one sub-controller 104 is connected to a gateway of the master controller 103. The master controller 103 may communicate with the at least one sub-controller 104 through an internal network, that is, the master controller 103 may be a gateway controller. For example, a drone dock controller forms a sub-network with a motor controller and a charging controller. In this case, the drone dock controller serves as a master controller, and the motor controller and the charging controller serve as sub-controllers.

In this application, the diagnostic device 101 may be a diagnostic device independent of the vehicle, or may be a diagnostic device integrated in the vehicle like the master controller 103 and the at least one sub-controller 104. General diagnostic communication is performed between the master controller 103 and the diagnostic device 101. Because the master controller 103 and the at least one sub-controller 104 are located in a same network segment, the master controller 103 performs interactive control with the at least one sub-controller 104 through an internal network of the master controller 103 and the at least one sub-controller 104.

Specifically, the at least one sub-controller 104 is configured to send at least one piece of second packet data to the master controller 103. The master controller 103 is configured to obtain at least one type of information. The at least one type of information includes at least one of the following: first packet data or the at least one piece of second packet data, and the first packet data is generated by the master controller 103. The diagnostic device 101 is configured to send a diagnostic request to the master controller 103. The master controller 103 is further configured to generate diagnostic data based on the at least one type of information when receiving the diagnostic request. The master controller 103 is further configured to send the diagnostic data to the diagnostic device 101.

In this way, when performing a diagnostic service with the controllers of the entire vehicle, the diagnostic device does not need to perform the diagnostic service with each controller by using a UDS diagnostic protocol, and only needs to perform UDS diagnostic service development with the master controller 103. This avoids performing UDS development for each controller, thereby avoiding a relatively long development cycle and relatively low development efficiency. In addition, the master controller 103 performs, based on the diagnostic request sent by the diagnostic device 101 to the master controller 103, interactive control with the at least one sub-controller 104 through an internal network, to implement the diagnostic request. Moreover, independent development does not need to be performed for each in-vehicle controller based on a corresponding interaction protocol used when interactive control is performed through the internal network, thereby shortening a development cycle of the controllers of the entire vehicle and improving development efficiency of the controllers of the entire vehicle.

In addition, in this application, the master controller 103 performs interactive control with the at least one sub-controller 104 through an internal network, UDS diagnostic service development does not need to be performed, and therefore, a resource of a diagnostic identifier is not occupied, thereby improving utilization of the diagnostic identifier.

Specifically, UDS diagnostic service development is performed on the master controller 103, to implement general diagnostic communication between the master controller 103 and the diagnostic device 101. The master controller 103 performs signal exchange and control with the at least one sub-controller 104 in the sub-network of the master controller 103 and the at least one sub-controller 104 by using protocols such as an application packet and an LIN packet, to process, by using the protocols such as the application packet and the LIN packet, data of all controllers that is required by the diagnostic request sent by the diagnostic device 101 to the master controller 103. The master controller 103 sends the data to the diagnostic device 101, to implement the diagnostic request of the diagnostic device 101.

For example, if the drone dock controller forms the sub-network with the motor controller and the charging controller, the drone dock controller may serve as the master controller to perform UDS diagnostic service development. When receiving the diagnostic request sent by the diagnostic device, the drone dock controller exchanges, based on the diagnostic request, an application packet with the motor controller and the charging controller through a sub-network, to generate packet data corresponding to the diagnostic request, and then the drone dock controller sends the packet data to the diagnostic device.

Based on this, an embodiment of this application provides an in-vehicle controller diagnostic method. The following describes this embodiment of this application in detail with reference to the accompanying drawings.

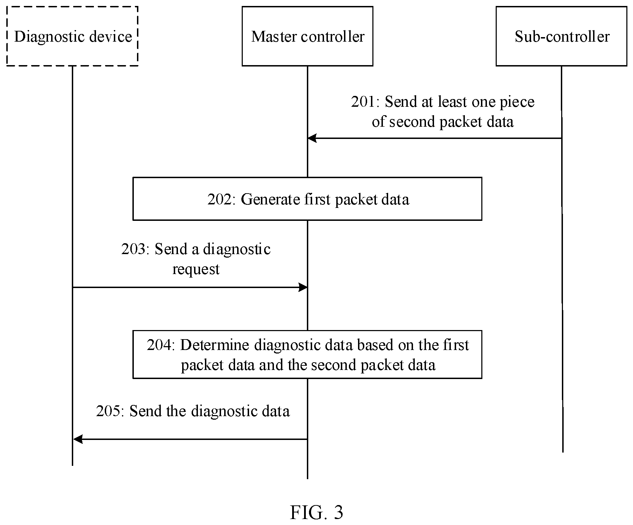

FIG. 3 is a schematic flowchart of an in-vehicle controller diagnostic method according to an embodiment of this application. The method is applied to the system shown in FIG. 2. As shown in FIG. 3, the method includes the following operations.

201: at least one sub-controller sends at least one piece of second packet data to a master controller. Correspondingly, the master controller receives the at least one piece of second packet data from the at least one sub-controller.

The at least one sub-controller may periodically send the at least one piece of second packet data, or may send the at least one piece of second packet data in response to event triggering.

202: the master controller generates first packet data.

Similarly, the first packet data may be periodically generated by the master controller, or may be generated by the master controller in response to event triggering. After obtaining the first packet data and the at least one piece of second packet data, the master controller may store the first packet data and the at least one piece of second packet data.

203: a diagnostic device sends a diagnostic request to the master controller. Correspondingly, the master controller receives a diagnostic request from the diagnostic device.

204: the master controller determines diagnostic data based on the first packet data and the at least one piece of second packet data.

In some embodiments, when a target condition is met, the master controller determines the diagnostic data based on the first packet data and the at least one piece of second packet data. For example, meeting the target condition means that when the diagnostic device sends the diagnostic request to the master controller. To be specific, when receiving the diagnostic request sent by the diagnostic device to the master controller, the master controller determines the diagnostic data based on the first packet data and the at least one piece of second packet data. It will be noted that meeting the target condition may alternatively be another condition. This is not limited in this application. In another embodiment, the master controller may directly determine the diagnostic data based on the first packet data and the at least one piece of second packet data, and does not need to trigger determining of the diagnostic data only when the target condition is met.

205: the master controller sends the diagnostic data to the diagnostic device.

After receiving the diagnostic request of the diagnostic device, the master controller not only needs to provide all diagnostic services of the master controller, but also needs to integrate signal content of all diagnostic services of another sub-controller. The at least one piece of second packet data is packet data generated by the at least one sub-controller, to be specific, may be packet data automatically generated by the at least one sub-controller based on a cycle, or may be packet data generated by the at least one sub-controller based on a corresponding instruction. In addition, the current operation is an operation exists based on 203. In other words, if 203 does not exist, the current operation also does not exist.

In some embodiments, the diagnostic data is determined based on the obtained first packet data of the master controller. Optionally, the diagnostic data is determined based on the obtained second packet data of the sub-controller. Optionally, the diagnostic data is determined based on the obtained first packet data of the master controller and the obtained second packet data of the sub-controller. A quantity of pieces of second packet data corresponds to a quantity of sub-controllers that send packet data to the master controller. In addition, the first packet data and the at least one piece of second packet data include different software and hardware version information and different packet identifiers of a dynamic data stream.

The diagnostic device may implement all functions of a UDS diagnostic service by using the master controller. Therefore, in some embodiments, the diagnostic request sent by the diagnostic device includes one or more of a data reading request, a fault code information reading request, a diagnostic information clearing request, an input/output control request, a data calibration request, and a routine control request.

To ensure information sending and reading efficiency, each diagnostic request may be indicated by a diagnostic identifier. For example, a diagnostic identifier corresponding to the data reading request is 22H, a diagnostic identifier corresponding to the fault code information reading request is 19H, a diagnostic identifier corresponding to the diagnostic information clearing request is 14H, a diagnostic identifier corresponding to the input/output control request is 2FH, a diagnostic identifier corresponding to the data calibration request is 2EH, and a diagnostic identifier corresponding to the routine control request is 31H. A diagnostic service for an in-vehicle controller is more complete by determining the diagnostic request.

Specifically, in some embodiments, when the diagnostic request is the data reading request, the in-vehicle controller diagnostic method includes the following operations.

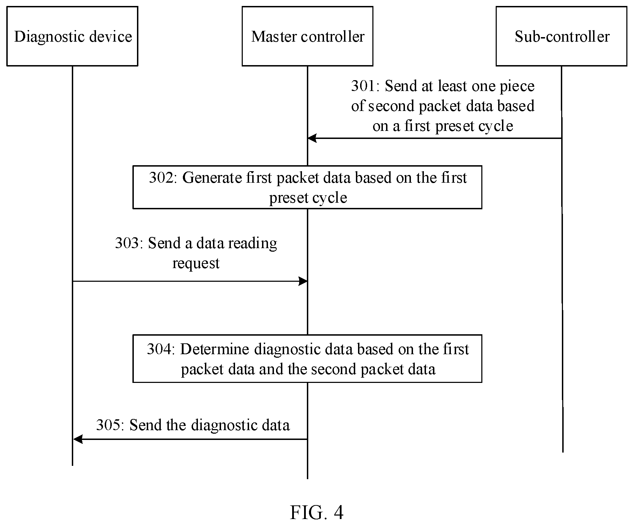

FIG. 4 is a schematic flowchart of an in-vehicle controller diagnostic method according to another embodiment of this application. As shown in FIG. 4, the method includes the following operations.

301: at least one sub-controller sends at least one piece of second packet data to a master controller based on a first preset cycle. Correspondingly, the master controller receives the second packet data from the at least one sub-controller.

302: the master controller generates first packet data based on the first preset cycle.

303: a diagnostic device sends a data reading request to the master controller. Correspondingly, the master controller receives the data reading request from the diagnostic device.

304: the master controller determines diagnostic data based on the first packet data and the at least one piece of second packet data.

305: the master controller sends the diagnostic data to the diagnostic device.

The first packet data is data generated by the master controller based on the first preset cycle, and the at least one piece of second packet data is data sent by the at least one sub-controller to the master controller based on the first preset cycle.

If the data reading request is used to indicate reading data of a controller by using an identifier, for example, reading a hardware version number of the controller, the first packet data and the second packet data correspond to the hardware version number. Because the master controller exchanges an application packet with the at least one sub-controller through an internal network, in terms of an implementation of the data reading request, a communication and interaction application packet needs to be designed between the master controller and the at least one sub-controller.

For example, designing a communication and interaction application packet related to the data reading request may include the following operations.
(1) The master controller sets a dedicated application packet identifier for a diagnostic service for the data reading request.

For example, the application packet identifier of the diagnostic service for the data reading diagnostic request may be set to 0×12A. Because an application packet identifier in an internal network may be set independently, which does not conflict with that in an external network, different application packet identifiers may be separately set for version information and a dynamic data stream (the same applies to the following embodiments).

(2) The master controller defines a data type as Cycle for packet data content that needs to be reported by the sub-controller.

The cycle is as short as possible to ensure better timeliness.

(3) The master controller sets a data algorithm and definition related to the data reading request.

The master controller, serving as a transit node controller, receives an instruction of the data reading request of the diagnostic device and sends the instruction to the sub-controller, and collects packet data of the sub-controller. In addition, because a data type of content corresponding to the data reading request is Cycle, the master controller does not need to actively send an Event event-type application packet to the sub-controller. The master controller only needs to receive, in a timely manner when receiving the data reading request, the packet data sent by the sub-controller, and send corresponding diagnostic data to the diagnostic device by using a UDS diagnostic service.

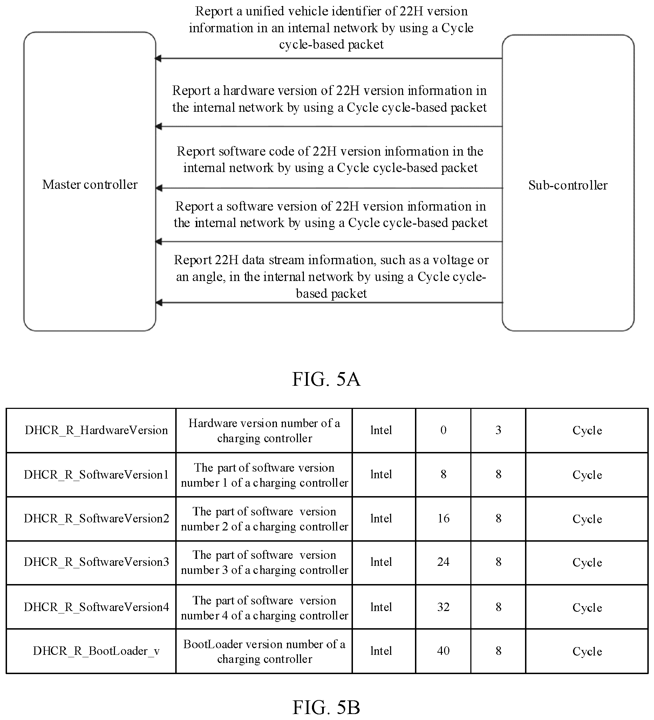

The following uses FIG. 5A and FIG. 5B as examples for description.

For example, FIG. 5A is a schematic flowchart of service interaction for a data reading request according to an embodiment of this application. As shown in FIG. 5A, the service interaction for the data reading request includes the following content.

Each sub-controller needs to upload, based on a corresponding cycle, an application packet related to 22H (data reading). Specifically, the sub-controller reports a unified vehicle identifier of 22H version information in the internal network based on a corresponding cycle by using a Cycle cycle-based packet. In addition, the sub-controller reports a hardware version of 22H version information in the internal network based on the corresponding cycle by using a Cycle cycle-based packet, the sub-controller reports software code of 22H version information in the internal network based on a corresponding cycle by using a Cycle cycle-based packet, the sub-controller reports a software version of 22H version information in the internal network based on a corresponding cycle by using a Cycle cycle-based packet, and the sub-controller reports 22H data stream information, such as a voltage or an angle, in the internal network based on a corresponding cycle by using a Cycle cycle-based packet.

In addition, for example, FIG. 5B is a design matrix diagram of application data for a data reading request according to an embodiment of this application. As shown in FIG. 5B, in the design matrix diagram, a first column includes an information identifier corresponding to the data, a second column includes a related definition of the data, a third column includes a communication method of the data, a fourth column and a fifth column include a corresponding version number, and a sixth column includes a data type of the data. For example, an information identifier of the data that corresponds to a first row is DHCR_R_HardwareVersion, which is defined as a hardware version number of a charging controller, a communication method is lntel, a corresponding version number is 03, and a data type is Cycle.

In some embodiments, when the diagnostic request is the fault code information reading request, the in-vehicle controller diagnostic method includes the following operations.

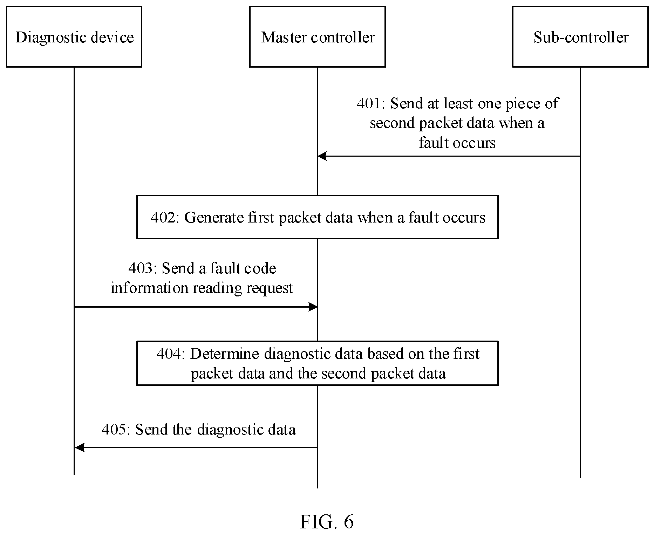

FIG. 6 is a schematic flowchart of an in-vehicle controller diagnostic method according to another embodiment of this application. As shown in FIG. 6, the method includes the following operations.

401: at least one sub-controller sends at least one piece of second packet data to a master controller when being faulty. Correspondingly, the master controller receives the second packet data from the at least one sub-controller.

402: the master controller generates first packet data when being faulty.

403: a diagnostic device sends a fault code information reading request to the master controller. Correspondingly, the master controller receives the fault code information reading request from the diagnostic device.

404: the master controller determines diagnostic data based on the first packet data and the at least one piece of second packet data.

405: the master controller sends the diagnostic data to the diagnostic device.

The first packet data is fault code information generated when the master controller is faulty, and the at least one piece of second packet data is fault code information sent to the master controller when one or at least one sub-controller in the at least one sub-controller is faulty.

The fault code information reading request is used to indicate reading a fault code and a status by using an identifier, for example, a quantity of fault codes of a controller and a corresponding fault code number. In addition, in terms of an implementation of the fault code information reading request, a communication and interaction application packet needs to be designed between the master controller and the at least one sub-controller.

For example, designing a communication and interaction application packet related to the fault code information reading request may include the following operations.
(1) The master controller sets a dedicated application packet identifier for a diagnostic service for the fault code information reading request.

For example, the application packet identifier of the diagnostic service for the fault code information reading request may be set to 0×12B. Similarly, because an application packet identifier in an internal network may be set independently, which does not conflict with that in an external network, different application packet identifiers may be separately set for version information and a dynamic data stream.

(2) The master controller defines a data type as Event for fault code information content that needs to be reported by the sub-controller.

(3) The master controller sets a quantity of to-be-reported fault codes.

For example, the following may be set: ten fault codes are to be uploaded simultaneously.

In some embodiments, when the diagnostic request is a diagnostic information clearing request, the in-vehicle controller diagnostic method includes the following operations.

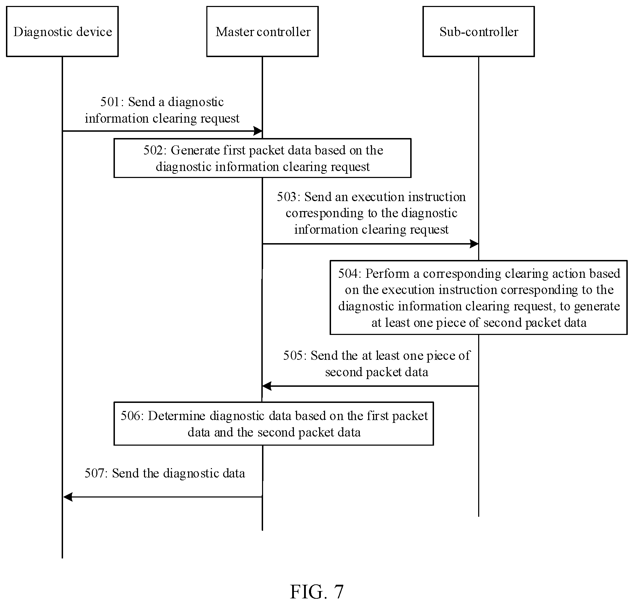

FIG. 7 is a schematic flowchart of an in-vehicle controller diagnostic method according to another embodiment of this application. As shown in FIG. 7, the method includes the following operations.

501: a diagnostic device sends a diagnostic information clearing request to a master controller. Correspondingly, the master controller receives the diagnostic information clearing request from the diagnostic device.

502: the master controller generates first packet data based on the diagnostic information clearing request.

503: the master controller sends, to at least one sub-controller, an execution instruction corresponding to the diagnostic information clearing request.

504: the at least one sub-controller performs a corresponding clearing action based on the execution instruction corresponding to the diagnostic information clearing request, to generate at least one piece of second packet data.

505: the at least one sub-controller sends the at least one piece of second packet data to the master controller. Correspondingly, the master controller receives the second packet data from the at least one sub-controller.

506: the master controller determines diagnostic data based on the first packet data and the at least one piece of second packet data.

507: the master controller sends the diagnostic data to the diagnostic device.

The first packet data is clearing result feedback data generated by the master controller based on the diagnostic information clearing request, and the at least one piece of second packet data is clearing result feedback data that corresponds to the diagnostic information clearing request and that is sent to the master controller after the at least one sub-controller receives the execution instruction that corresponds to the diagnostic information clearing request and that is sent by the master controller.

In some embodiments, the execution instruction corresponding to the diagnostic information clearing request includes a packet identifier corresponding to the diagnostic information clearing request.

The diagnostic information clearing request is used to indicate clearing a fault code and a status by using an identifier. When the master controller sends, to the sub-controller, the execution instruction corresponding to the diagnostic information clearing request, the execution instruction includes the packet identifier corresponding to the diagnostic information clearing request. In addition, an application packet ID in an internal network may be set independently, which does not conflict with that in an external network, and does not occupy a resource of a diagnostic identifier.

In addition, in terms of an implementation of the diagnostic information clearing request, a communication and interaction application packet needs to be designed between the master controller and the at least one sub-controller.

For example, designing a communication and interaction application packet related to the diagnostic information clearing request may include the following operations.
(1) The master controller sets a dedicated application packet identifier for a diagnostic service for the diagnostic information clearing request.
(2) The master controller defines a data type as Event for the clearing result feedback data that corresponds to the diagnostic information clearing request and that needs to be reported by the sub-controller.

The master controller, serving as a transit node controller, receives an instruction of the fault code information reading request and an instruction of the diagnostic information clearing request of the diagnostic device and sends the instructions to the sub-controller, and collects packet data of the sub-controller. For the instruction of the fault code information reading request, the master controller does not need to actively send an Event event-type application packet to the sub-controller. When the sub-controller is faulty, the sub-controller reports fault code content to the master controller by using an Event event-type application packet. The master controller stores the fault code content in a non-volatile memory. When the master controller receives the instruction of the diagnostic device that is related to the diagnostic information clearing request, in addition to performing a clearing action, the master controller further needs to deliver a corresponding instruction to the sub-controller by using an Event event-type application packet. The sub-controller performs a diagnostic information cache clearing action, and then sends the clearing result feedback data to the master controller. The master controller arranges the clearing result feedback data of the master controller and the clearing result feedback data of the sub-controller, and then sends the clearing result feedback data to the diagnostic device. As a final node controller, when receiving the instruction corresponding to the diagnostic information clearing request, the sub-controller only needs to perform clearing processing on a current cache, that is, clear a historical fault code.

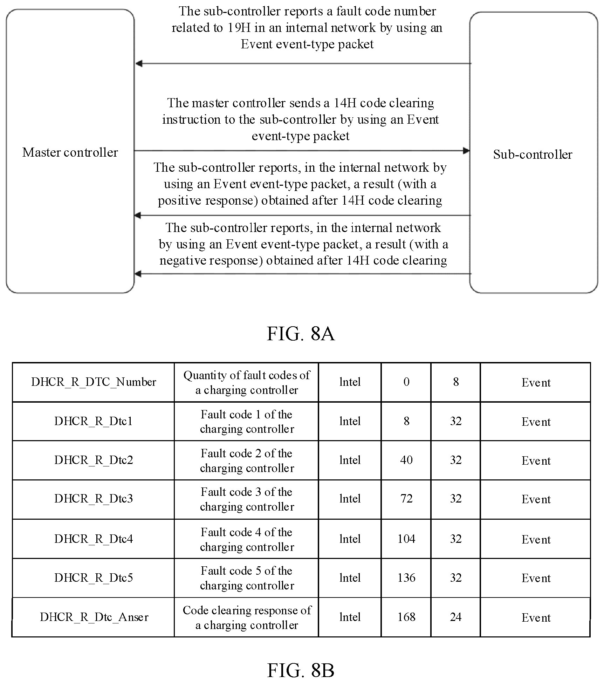

The following uses FIG. 8A and FIG. 8B as examples for description.

For example, FIG. 8A is a schematic flowchart of service interaction for a fault code information reading/clearing request according to an embodiment of this application. As shown in FIG. 8A, the service interaction for the fault code information reading/clearing request includes the following content.

For each sub-controller, when the sub-controller is faulty, the sub-controller reports a fault code number related to 19H (fault code information reading) in an internal network by using an Event event-type packet. When the master controller receives an instruction of the diagnostic device that is related to the diagnostic information clearing request, the master controller sends a 14H (diagnostic information clearing) code clearing instruction to the sub-controller by using an Event event-type packet. The sub-controller performs a clearing action, and the sub-controller reports, in the internal network by using an Event event-type packet, a result obtained after 14H code clearing. The result obtained after clearing includes a result with a positive response and a result with a negative response.

In addition, for example, FIG. 8B is a design matrix diagram of application data for a fault code information reading/clearing request according to an embodiment of this application. As shown in FIG. 8B, in the design matrix diagram, a first row to a sixth row include corresponding information of a fault code, and a seventh row includes clearing result feedback data. For each row, a first column includes an information identifier corresponding to the data, a second column includes a related definition of the data, a third column includes a communication method of the data, and a sixth column includes a data type of the data. For the first row, a fourth column and a fifth column include a quantity of fault codes. For the second row to the sixth row, the fourth column and the fifth column include fault code information. For a seventh row, the fourth column and the fifth column include a clearing response status fed back by a controller. For example, an information identifier of the data that corresponds to the first row is DHCR_R_DTC_Number, and content defined by the information identifier is a quantity of fault codes of a charging controller; a communication method is lntel; a corresponding quantity of fault codes is 8; and a data type is Event.

In some embodiments, when the diagnostic request is an input/output control request, the in-vehicle controller diagnostic method includes the following operations.

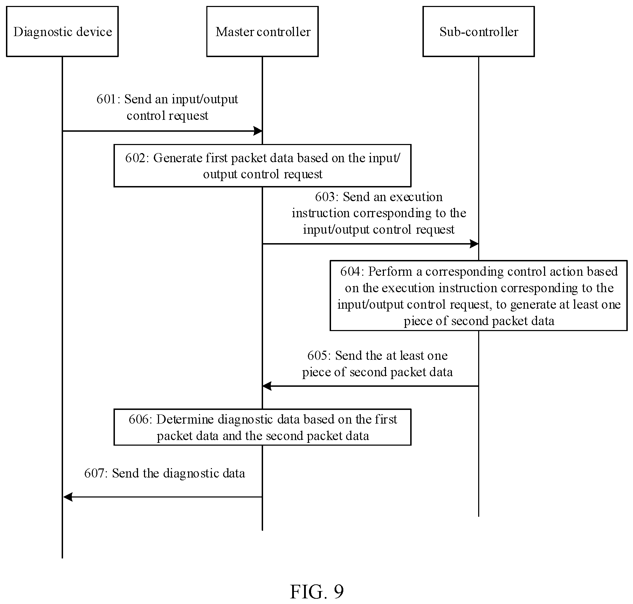

FIG. 9 is a schematic flowchart of an in-vehicle controller diagnostic method according to another embodiment of this application. As shown in FIG. 9, the method includes the following operations.

601: a diagnostic device sends an input/output control request to a master controller. Correspondingly, the master controller receives the input/output control request from the diagnostic device.

602: the master controller generates first packet data based on the input/output control request.

603: the master controller sends, to at least one sub-controller, an execution instruction corresponding to the input/output control request.

604: the at least one sub-controller performs a corresponding control action based on the execution instruction corresponding to the input/output control request, to generate at least one piece of second packet data.

605: the at least one sub-controller sends the at least one piece of second packet data to the master controller. Correspondingly, the master controller receives the second packet data from the at least one sub-controller.

606: the master controller determines diagnostic data based on the first packet data and the at least one piece of second packet data.

607: the master controller sends the diagnostic data to the diagnostic device.

The diagnostic data is determined based on the following information: the first packet data and the at least one piece of second packet data. The first packet data is execution result feedback data generated by the master controller based on the input/output control request, and the at least one piece of second packet data is execution result feedback data that corresponds to the input/output control request and that is sent to the master controller after the at least one sub-controller receives the execution instruction that corresponds to the input/output control request and that is sent by the master controller.

In some embodiments, the execution instruction corresponding to the input/output control request includes a packet identifier corresponding to the input/output control request.

The input/output control request is used to indicate controlling input/output by using an identifier, for example, controlling a vehicle light to be turned on or off. When the master controller sends, to the sub-controller, the execution instruction corresponding to the input/output control request, the execution instruction includes the packet identifier corresponding to the input/output control request. In addition, an application packet ID in an internal network may be set independently, which does not conflict with that in an external network, and does not occupy a resource of a diagnostic identifier.

In addition, in terms of an implementation of the input/output control request, a communication and interaction application packet needs to be designed between the master controller and the at least one sub-controller.

For example, designing a communication and interaction application packet related to the input/output control request may include the following operations.
(1) The master controller sets a dedicated application packet identifier for a diagnostic service for the input/output control request.

For example, the application packet identifier of the diagnostic service for the input/output control request may be set to 0×12C.

(2) The master controller defines a data type as Event for the execution result feedback data that corresponds to the input/output control request and that needs to be reported by the sub-controller.

(3) The master controller sets request content and response content that correspond to the input/output control request.

The master controller, serving as a transit node controller, receives an instruction of the input/output control request of the diagnostic device and sends the instruction to the sub-controller, and collects packet data of the sub-controller. After receiving the instruction of the input/output control request sent by the diagnostic device, in addition to performing a corresponding action, the master controller further needs to send, to the sub-controller, an Event event-type application packet corresponding to the input/output control request. After receiving the Event event-type application packet corresponding to the input/output control request, the sub-controller performs a corresponding action, and then sends the execution result feedback data to the master controller. After integrating the feedback data, the master controller sends the feedback data to the diagnostic device. As a final node controller, when receiving the instruction corresponding to the input/output control request, the sub-controller only needs to perform control output on the current instruction, and feeds back an execution result to the master controller.

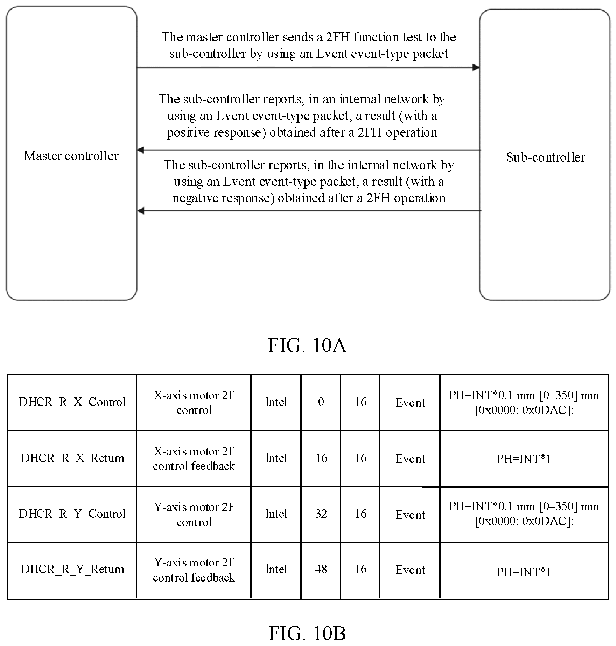

The following uses FIG. 10A and FIG. 10B as examples for description.

For example, FIG. 10A is a schematic flowchart of service interaction for an input/output control request according to an embodiment of this application. As shown in FIG. 10A, the service interaction for the input/output control request includes the following content.

For each sub-controller, when the master controller receives the instruction of the diagnostic device that is related to the input/output control request, the master controller sends a 2FH (input/output control) function test to the sub-controller by using an Event event-type packet. After the sub-controller performs a corresponding action, the sub-controller reports, in an internal network by using an Event event-type packet, a result obtained after a 2FH operation. The result includes a result with a positive response or a result with a negative response.

In addition, for example, FIG. 10B is a design matrix diagram of application data for an input/output control request according to an embodiment of this application. As shown in FIG. 10B, in the design matrix diagram, a first row and a third row include corresponding information of input/output control, and a second row and a fourth row include corresponding information of input/output control execution feedback. For each row, a first column includes an information identifier corresponding to the data, a second column includes a related definition of the data, a third column includes a communication method of the data, a sixth column includes a data type of the data, and a seventh column includes algorithm information. For the first row and the third row, a fourth column and a fifth column are used to indicate input/output control information. For the second row and the fourth row, the fourth column and the fifth column are used to indicate input/output control execution feedback information. For example, an information identifier of the data that corresponds to the first row is DHCR_R_X_Control, and content defined by the information identifier is X-axis motor 2F control, a communication method is lntel, a corresponding initial state is 0, a control amount is 16, a data type is Event, and a corresponding control algorithm is PH=INT*0.1 mm [0-350] mm [0x0000; 0x0DAC].

In addition, in some embodiments, when the diagnostic request is the data calibration request, the in-vehicle controller diagnostic method includes the following operations.

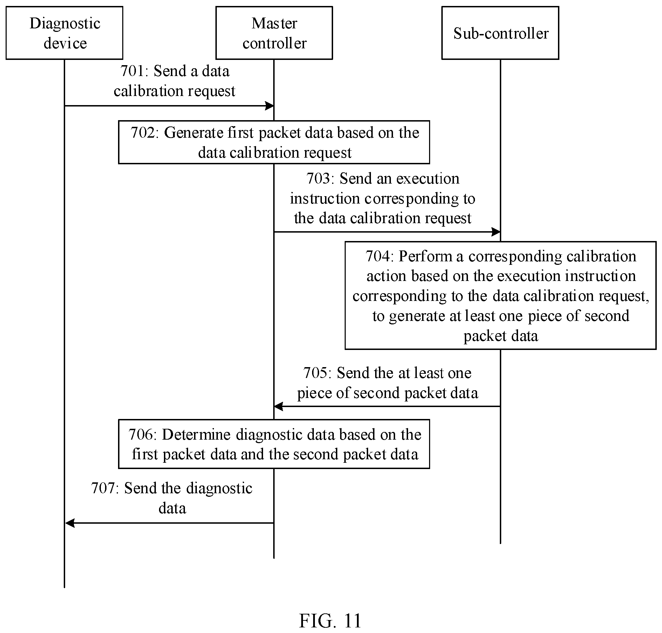

Referring to FIG. 11, FIG. 11 is a schematic flowchart of an in-vehicle controller diagnostic method according to another embodiment of this application. As shown in FIG. 11, the method includes the following operations.

701: a diagnostic device sends a data calibration request to a master controller. Correspondingly, the master controller receives the data calibration request from the diagnostic device.

702: the master controller generates first packet data based on the data calibration request.

703: the master controller sends, to at least one sub-controller, an execution instruction corresponding to the data calibration request.

704: the at least one sub-controller performs a corresponding calibration action based on the execution instruction corresponding to the data calibration request, to generate at least one piece of second packet data.

705: the at least one sub-controller sends the at least one piece of second packet data to the master controller. Correspondingly, the master controller receives the second packet data from the at least one sub-controller.

706: the master controller determines diagnostic data based on the first packet data and the at least one piece of second packet data.

707: the master controller sends the diagnostic data to the diagnostic device.

The first packet data is execution result feedback data generated by the master controller based on the data calibration request, and the at least one piece of second packet data is execution result feedback data that corresponds to the data calibration request and that is sent to the master controller after the at least one sub-controller receives the execution instruction that corresponds to the data calibration request and that is sent by the master controller.

In some embodiments, the execution instruction corresponding to the data calibration request includes a packet identifier corresponding to the data calibration request.

The data calibration request is used to indicate writing data to a memory by using an identifier, for example, setting a calibration parameter of a motor. When the master controller sends, to the sub-controller, the execution instruction corresponding to the data calibration request, the execution instruction includes the packet identifier corresponding to the data calibration request. In addition, an application packet ID in an internal network may be set independently, which does not conflict with that in an external network, and does not occupy a resource of a diagnostic identifier.

In addition, in terms of an implementation of the data calibration request, a communication and interaction application packet needs to be designed between the master controller and the at least one sub-controller.

For example, designing a communication and interaction application packet related to the data calibration request may include the following operations.
(1) The master controller sets a dedicated application packet identifier for the data calibration request.

For example, the application packet identifier of a diagnostic service for the data calibration request may be set to 0×12D.

(2) The master controller defines a data type as Event for the execution result feedback data that corresponds to the data calibration request and that needs to be reported by the sub-controller.

(3) The master controller sets request content and response content that correspond to the data calibration request.

The master controller, serving as a transit node controller, receives an instruction of the data calibration request of the diagnostic device and sends the instruction to the sub-controller, and collects packet data of the sub-controller. After receiving the instruction of the data calibration request sent by the diagnostic device, in addition to performing a corresponding action, the master controller further needs to send, to the sub-controller, an Event event-type application packet corresponding to the data calibration request. After receiving the Event event-type application packet corresponding to the data calibration request, the sub-controller performs a corresponding action, and then sends the execution result feedback data to the master controller. After integrating the feedback data, the master controller sends the feedback data to the diagnostic device. As a final node controller, after receiving the instruction corresponding to the data calibration request, the sub-controller only needs to set and store a calibration amount for the current instruction, and feeds back an execution result to the master controller.

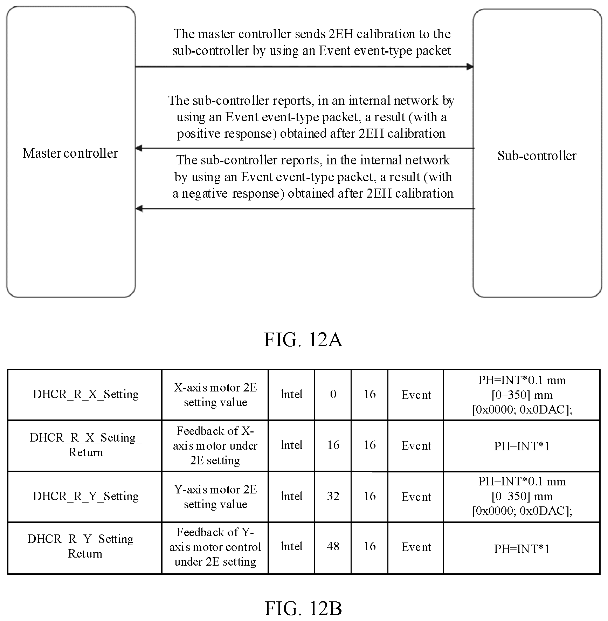

The following uses FIG. 12A and FIG. 12B as examples for description.

For example, referring to FIG. 12A, FIG. 12A is a schematic flowchart of service interaction for a data calibration request according to an embodiment of this application. As shown in FIG. 12A, the service interaction for the data calibration request includes the following content.

For each sub-controller, when the master controller receives the instruction of the diagnostic device that is related to the data calibration request, the master controller sends 2EH (data calibration) calibration to the sub-controller by using an Event event-type packet. After the sub-controller performs a corresponding action, the sub-controller reports, in an internal network by using an Event event-type packet, a result obtained after 2EH calibration. The result includes a result with a positive response or a result with a negative response.

In addition, for example, referring to FIG. 12B, FIG. 12B is a design matrix diagram of application data for a data calibration request according to an embodiment of this application. As shown in FIG. 12B, in the design matrix diagram, a first row and a third row include corresponding information of data calibration, and a second row and a fourth row include corresponding information of data calibration execution feedback. For each row, a first column includes an information identifier corresponding to the data, a second column includes a related definition of the data, a third column includes a communication method of the data, a sixth column includes a data type of the data, and a seventh column includes algorithm information. For the first row and the third row, a fourth column and a fifth column are used to indicate calibration information. For the second row and the fourth row, the fourth column and the fifth column are used to indicate calibration execution feedback information. For example, an information identifier of the data that corresponds to the first row is DHCR_R_X_Setting, and content defined by the information identifier is an X-axis motor 2E setting value, a communication method is lntel, a corresponding initial state is 0, a calibration amount is 16, a data type is Event, and a corresponding calibration algorithm is PH=INT*0.1 mm [0-350] mm [0x0000; 0x0DAC].

In addition, in some embodiments, when the diagnostic request is the routine control request, the in-vehicle controller diagnostic method includes the following operations.

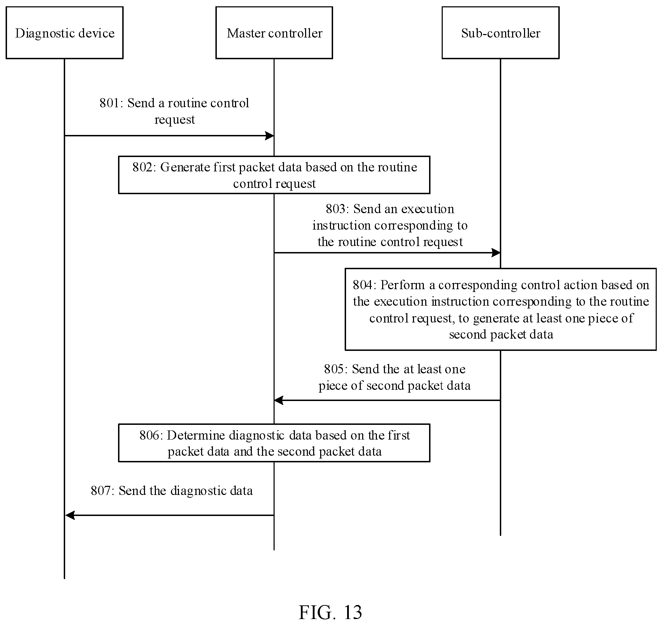

Referring to FIG. 13, FIG. 13 is a schematic flowchart of an in-vehicle controller diagnostic method according to another embodiment of this application. As shown in FIG. 13, the method includes the following operations.

801: a diagnostic device sends a routine control request to a master controller. Correspondingly, the master controller receives the routine control request from the diagnostic device.

802: the master controller generates first packet data based on the routine control request.

803: the master controller sends, to at least one sub-controller, an execution instruction corresponding to the routine control request.

804: the at least one sub-controller performs a corresponding control action based on the execution instruction corresponding to the routine control request, to generate at least one piece of second packet data.

805: the at least one sub-controller sends the at least one piece of second packet data to the master controller. Correspondingly, the master controller receives the second packet data from the at least one sub-controller.

806: the master controller determines diagnostic data based on the first packet data and the at least one piece of second packet data.

807: the master controller sends the diagnostic data to the diagnostic device.

The first packet data is execution result feedback data generated by the master controller based on the routine control request, and the at least one piece of second packet data is execution result feedback data that corresponds to the routine control request and that is sent to the master controller after the at least one sub-controller receives the execution instruction that corresponds to the routine control request and that is sent by the master controller.

In some embodiments, the execution instruction corresponding to the routine control request includes a packet identifier corresponding to the routine control request.

The routine control request is used to indicate writing data to a memory by using an identifier, for example, updating a program. When the master controller sends, to the sub-controller, the execution instruction corresponding to the routine control request, the execution instruction includes the packet identifier corresponding to the routine control request. In addition, an application packet ID in an internal network may be set independently, which does not conflict with that in an external network, and does not occupy a resource of a diagnostic identifier.

In addition, in terms of an implementation of the routine control request, a communication and interaction application packet needs to be designed between the master controller and the at least one sub-controller.

For example, designing a communication and interaction application packet related to the routine control request may include the following operations.
(1) The master controller sets a dedicated application packet identifier for the routine control request.

For example, the application packet identifier of a diagnostic service for the routine control request may be set to 0×12E.

(2) The master controller defines a data type as Event for the execution result feedback data that corresponds to the routine control request and that needs to be reported by the sub-controller.

(3) The master controller sets request content and response content that correspond to the routine control request.

The master controller, serving as a transit node controller, receives an instruction of the routine control request of the diagnostic device and sends the instruction to the sub-controller, and collects packet data of the sub-controller. After receiving the instruction of the routine control request sent by the diagnostic device, in addition to performing a corresponding action, the master controller further needs to send, to the sub-controller, an Event event-type application packet corresponding to the routine control request. After receiving the Event event-type application packet corresponding to the routine control request, the sub-controller performs a series of corresponding control or detection actions, and then sends the execution result feedback data to the master controller. After integrating the feedback data, the master controller sends the feedback data to the diagnostic device. As a final node controller, after receiving the instruction corresponding to the routine control request, the sub-controller only needs to perform routine control of a specific value on the current instruction, and feeds back an execution result to the master controller.

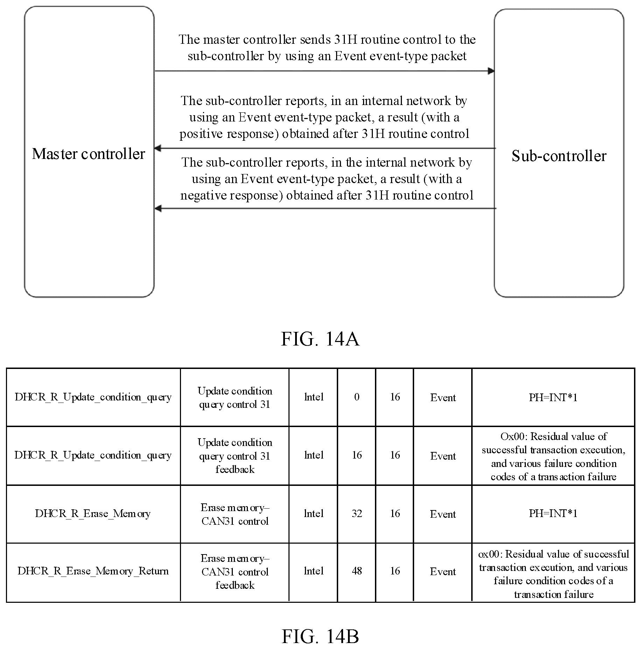

The following uses FIG. 14A and FIG. 14B as examples for description.

For example, FIG. 14A is a schematic flowchart of service interaction for a routine control request according to an embodiment of this application. As shown in FIG. 14A, the service interaction for the routine control request includes the following content.

For each sub-controller, when the master controller receives the instruction of the diagnostic device that is related to the routine control request, the master controller sends 31H (routine control) routine control to the sub-controller by using an Event event-type packet. After the sub-controller performs a corresponding action, the sub-controller reports, in an internal network by using an Event event-type packet, a result obtained after 31H routine control. The result includes a result with a positive response or a result with a negative response.

In addition, for example, FIG. 14B is a design matrix diagram of application data for a routine control request according to an embodiment of this application. As shown in FIG. 14B, in the design matrix diagram, a first row and a third row include corresponding information of routine control, and a second row and a fourth row include corresponding information of routine control execution feedback. For each row, a first column includes an information identifier corresponding to the data, a second column includes a related definition of the data, a third column includes a communication method of the data, a sixth column includes a data type of the data, and a seventh column includes algorithm information. For the first row and the third row, a fourth column and a fifth column are used to indicate routine control information. For the second row and the fourth row, the fourth column and the fifth column are used to indicate routine control execution feedback information. For example, an information identifier of the data that corresponds to the first row is DHCR_R_Update_condition_query, and content defined by the information identifier is update condition query control 31, a communication method is lntel, a corresponding initial state is 0, a routine control amount is 16, a data type is Event, and a corresponding routine control algorithm is PH=INT*1.

It will be understood that, in the embodiments of this application, after receiving the diagnostic request of the diagnostic device, the master controller determines to generate the first packet data based on the diagnostic request, receives the second packet data of the at least one sub-controller through an internal network between the master controller and the at least one sub-controller, and finally, determines the diagnostic data based on the first packet data and the at least one piece of second packet data, and sends the diagnostic data to the diagnostic device, to implement a diagnostic service for an in-vehicle controller. In this way, when performing a diagnostic service with controllers of an entire vehicle, the diagnostic device does not need to perform the diagnostic service with each controller by using a UDS diagnostic protocol, and only needs to perform UDS diagnostic service development with the master controller. This avoids a relatively long development cycle and relatively low development efficiency caused by performing UDS diagnostic service development for each controller. In addition, the master controller performs, based on the diagnostic request sent by the diagnostic device to the master controller, interactive control with the at least one sub-controller through an internal network, to implement the diagnostic request. Moreover, independent development does not need to be performed for each in-vehicle controller based on a corresponding interaction protocol used when interactive control is performed through the internal network, thereby shortening a development cycle of the controllers of the entire vehicle and improving development efficiency of the controllers of the entire vehicle.

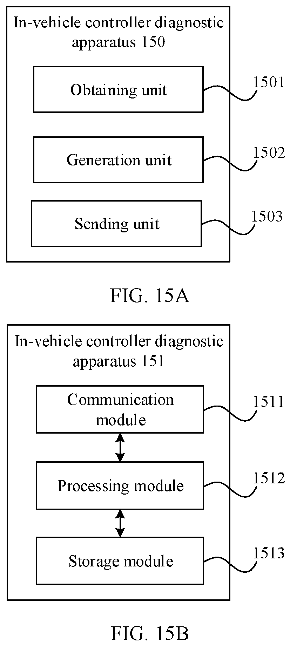

Consistent with the embodiments shown above, FIG. 15A is a block diagram of functional unit composition of an in-vehicle controller diagnostic apparatus according to an embodiment of this application. As shown in FIG. 15A, an in-vehicle controller diagnostic apparatus 150 is applied to a master controller, and the in-vehicle controller diagnostic apparatus 150 includes an obtaining unit 1501 and a generation unit 1502. The obtaining unit 1501 is configured to obtain at least one of the following information: first packet data and at least one piece of second packet data. The first packet data is packet data generated by the master controller, and the at least one piece of second packet data is packet data received by the master controller from at least one sub-controller. The generation unit 1502 is configured to generate diagnostic data based on the at least one type of information when a target condition is met.

In some embodiments, the apparatus further includes a sending unit 1503. The target condition includes: receiving a diagnostic request from a diagnostic device. After the diagnostic data is generated based on the at least one type of information, the sending unit 1503 is configured to send the diagnostic data to the diagnostic device.

In some embodiments, the diagnostic request includes one or more of a data reading request, a fault code information reading request, a diagnostic information clearing request, an input/output control request, a data calibration request, and a routine control request.

In some embodiments, when the diagnostic request is the data reading request, the at least one piece of second packet data is data sent by the at least one sub-controller to the master controller based on a first preset cycle, and the first packet data is data determined by the master controller based on the first preset cycle.

In some embodiments, when the diagnostic request is the fault code information reading request, the at least one piece of second packet data includes fault code information sent to the master controller when a target sub-controller is faulty, the target sub-controller is a controller in the at least one sub-controller, and the first packet data is fault code information generated when the master controller is faulty.

In some embodiments, when the diagnostic request is the diagnostic information clearing request, the at least one piece of second packet data is clearing result feedback data that corresponds to the diagnostic information clearing request and that is sent to the master controller after the at least one sub-controller receives an execution instruction that corresponds to the diagnostic information clearing request and that is sent by the master controller, and the first packet data is clearing result feedback data generated by the master controller based on the diagnostic information clearing request.

In some embodiments, the execution instruction corresponding to the diagnostic information clearing request includes a packet identifier corresponding to the diagnostic information clearing request.

In some embodiments, when the diagnostic request is the input/output control request, the at least one piece of second packet data is execution result feedback data that corresponds to the input/output control request and that is sent to the master controller after the at least one sub-controller receives an execution instruction that corresponds to the input/output control request and that is sent by the master controller, and the first packet data is execution result feedback data generated by the master controller based on the input/output control request.

In some embodiments, the execution instruction corresponding to the input/output control request includes a packet identifier corresponding to the input/output control request.

In some embodiments, when the diagnostic request is the data calibration request, the at least one piece of second packet data is execution result feedback data that corresponds to the data calibration request and that is sent to the master controller after the at least one sub-controller receives an execution instruction that corresponds to the data calibration request and that is sent by the master controller, and the first packet data is execution result feedback data generated by the master controller based on the data calibration request.

In some embodiments, the execution instruction corresponding to the data calibration request includes a packet identifier corresponding to the data calibration request.

In some embodiments, when the diagnostic request is the routine control request, the at least one piece of second packet data is execution result feedback data that corresponds to the routine control request and that is sent to the master controller after the at least one sub-controller receives an execution instruction that corresponds to the routine control request and that is sent by the master controller, and the first packet data is execution result feedback data generated by the master controller based on the routine control request.

In some embodiments, the execution instruction corresponding to the routine control request includes a packet identifier corresponding to the routine control request.

In some embodiments, the master controller and the at least one sub-controller are located in the same network segment.

In some embodiments, the first packet data and the at least one piece of second packet data include different software and hardware version information and different packet identifiers of a dynamic data stream.

It will be understood that the method embodiment and the apparatus embodiment are different presentation forms of a same technical concept. Therefore, content in the part of the method embodiment in this application will also be adapted to the part of the apparatus embodiment. Details are not described herein again.

When an integrated unit is used, FIG. 15B is a block diagram of functional unit composition of an in-vehicle controller diagnostic apparatus according to another embodiment of this application. In FIG. 15B, an in-vehicle controller diagnostic apparatus 151 includes a processing module 1512 and a communication module 1511. The processing module 1512 is configured to control and manage actions of the in-vehicle controller diagnostic apparatus, for example, operations performed by the obtaining unit 1501, the generation unit 1502, and the sending unit 1503, and/or is configured to perform another process of the technology described in this specification. The communication module 1511 is configured to support interaction between the in-vehicle controller diagnostic apparatus and another device. As shown in FIG. 15B, the in-vehicle controller diagnostic apparatus 151 may further include a storage module 1513, and the storage module 1513 is configured to store program code and data of the in-vehicle controller diagnostic apparatus.

The processing module 1512 may be a processor or a controller, for example, may be a central processing unit (CPU), a general-purpose processor, a digital signal processor (DSP), an ASIC, an FPGA or another programmable logic device, a transistor logic device, a hardware component, or any combination thereof. The processing module 1512 can implement or execute various example logical blocks, modules, and circuits described in combination with content disclosed in this application. The processor may alternatively be a combination that implements a computing function, such as a combination including one or more microprocessors or a combination of a DSP and a microprocessor. The communication module 1511 may be a transceiver, an RF circuit, a communication interface, or the like. The storage module 1513 may be a memory.

All related content of each scenario in the foregoing method embodiment may be referenced to a function description of a corresponding functional module. Details are not described herein again. The in-vehicle controller diagnostic apparatus 151 may perform all of the in-vehicle controller diagnostic methods shown in FIG. 3, FIG. 4, FIG. 6, FIG. 7, FIG. 9, FIG. 11, and FIG. 13.

All or some of the foregoing embodiments may be implemented by software, hardware, firmware, or any other combination. When software is used for implementation, all or some of the foregoing embodiments may be implemented in a form of a computer program product. The computer program product includes one or more computer instructions or computer programs. When the computer instruction or the computer program is loaded or executed on a computer, all or some of the procedures or functions according to the embodiments of this application are generated. The computer may be a general-purpose computer, a dedicated computer, a computer network, or another programmable apparatus. The computer instruction may be stored in a computer-readable storage medium or transmitted from one computer-readable storage medium to another computer-readable storage medium. For example, the computer instruction may be transmitted from one website, computer, server, or data center to another website, computer, server, or data center in a wired or wireless method. The computer-readable storage medium may be any available medium that can be accessed by a computer, or a data storage device such as a server or a data center that includes one or more available medium sets. The available medium may be a magnetic medium (for example, a floppy disk, a hard disk, or a magnetic tape), an optical medium (for example, a DVD), or a semiconductor medium. The semiconductor medium may be a solid state disk.

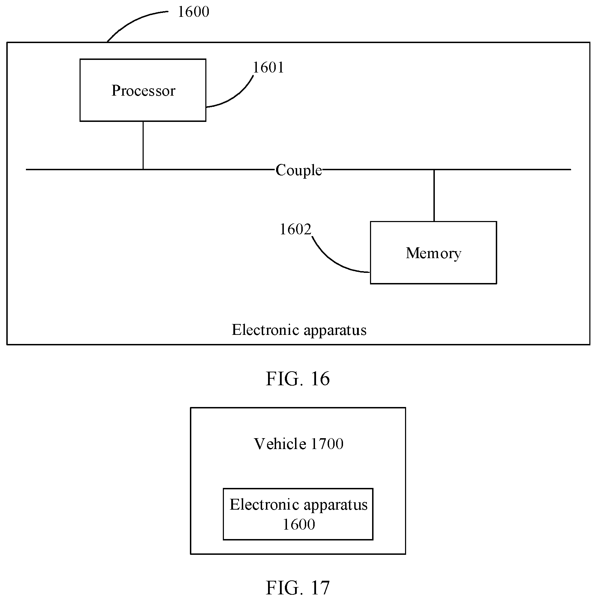

FIG. 16 is a block diagram of a structure of an electronic apparatus according to an embodiment of this application. As shown in FIG. 16, an electronic apparatus 1600 may include one or more of the following components: a processor 1601 and a memory 1602 coupled to the processor 1601. The memory 1602 may store one or more computer programs, and the one or more computer programs may be configured to implement, when being executed by the one or more processors 1601, the method described in the foregoing embodiments.

The processor 1601 may include one or more processing cores. The processor 1601 is connected to all parts of the entire electronic apparatus 1600 by using various interfaces and lines, and performs various functions and processing data of the electronic apparatus 1600 by running or executing an instruction, a program, a code set, or an instruction set stored in the memory 1602 and invoking data stored in the memory 1602. Optionally, the processor 1601 may be implemented in at least one hardware form of digital signal processing (DSP), a field-programmable gate array (FPGA), or a programmable logic array (PLA). The processor 1601 may integrate one of or a combination of more of a central processing unit (CPU), a graphics processing Unit (GPU), a modem, and the like. It will be understood that the modem may not be integrated into the processor 1601, and is separately implemented by using a communication chip.

The memory 1602 may include a random access memory (RAM), or may include a read-only memory (ROM). The memory 1602 may be configured to store an instruction, a program, code, a code set, or an instruction set. The memory 1602 may include a program storage area and a data storage area. The program storage area may store an instruction used to implement an operating system, an instruction used to implement at least one function (for example, a touch function, a sound play function, an image play function), an instruction used to implement the foregoing method embodiments, and the like. The data storage area may further store data created by the electronic apparatus 1600 during use, and the like.

It will be understood that the electronic apparatus 1600 may include more or fewer structural elements than those in the foregoing structural block diagram, for example, include a power module, a physical key, a Wi-Fi (Wireless Fidelity) module, a speaker, a Bluetooth module, and a sensor. This is not limited herein.

The electronic apparatus 1600 may be a master controller in an in-vehicle controller diagnostic system or a part of the master controller.

An embodiment of this application provides a vehicle. As shown in FIG. 17, a vehicle 1700 includes the foregoing electronic apparatus 1600.

An embodiment of this application provides a computer-readable storage medium. The computer-readable storage medium stores program data. When being executed by a processor, the program data is used to perform some or all operations of any in-vehicle controller diagnostic method described in the foregoing method embodiments.

An embodiment of this application further provides a computer program product. The computer program product includes a non-transitory computer-readable storage medium that stores a computer program. The computer program may be operated to enable a computer to perform some or all operations of any in-vehicle controller diagnostic method described in the foregoing method embodiments. The computer program product may be a software installation package.

It will be noted that, for brief description, the foregoing method embodiments of any in-vehicle controller diagnostic method are all described as a series of actions. However, a person skilled in the art will understand that this application is not limited to the described action sequence, because according to this application, some operations may be performed in another sequence or simultaneously. In addition, a person skilled in the art will also understand that the embodiments described in the specification are all example embodiments, and related actions are not necessarily required in this application.

Although this application is described with reference to the embodiments herein, in a process of implementing this application that claims protection, other variations of the disclosed embodiments will be understood and implemented by a person skilled in the art by viewing the accompanying drawings, the disclosed content, and the appended claims. In the claims, the term "comprising (comprising)" does not exclude other components or operations, and "a" or "one" does not exclude a case of "a plurality of". Some measures are recorded in dependent claims different from each other, but this does not mean that the measures cannot be combined to produce a good effect.

A person of ordinary skill in the art will understand that all or some operations of the methods in the foregoing method embodiments of any in-vehicle controller diagnostic method may be completed by a program instructing related hardware. The program may be stored in a computer-readable memory, and the memory may include a flash memory, a read-only memory (English: Read-Only Memory, ROM for short), a random access memory (English: Random Access Memory, RAM for short), a magnetic disk, an optical disk, or the like.

Embodiments of this application are described in detail above. The principles and implementations of the in-vehicle controller diagnostic method and the related apparatus in this application are described in this specification by using specific examples. The descriptions of the foregoing embodiments are merely used for helping understand the method and core ideas of this application. In addition, a person of ordinary skill in the art may change a specific implementation and an application scope based on the idea of the in-vehicle controller diagnostic method and the related apparatus in this application. In summary, content of the specification will not be construed as a limitation on this application.

This application is described with reference to flowcharts and/or block diagrams of the method, the hardware product, and the computer program product in the embodiments of this application. It will be understood that each procedure and/or block in the flowchart and/or block diagram, as well as a combination of procedures and/or blocks in the flowchart and/or block diagram, may be implemented by computer program instructions. These computer program instructions may be provided to a processor of a general-purpose computer, a dedicated computer, an embedded processor, or another programmable data processing device to generate a machine, so that the instructions executed by the processor of the computer or another programmable data processing device generate an apparatus for implementing a function specified in one or more procedures in the flowchart and/or one or more blocks in the block diagram.

These computer program instructions may alternatively be stored in a computer-readable memory that can instruct a computer or another programmable data processing device to work in a specific manner, so that the instructions stored in the computer-readable memory generates a manufacturer including a product. The instruction apparatus implements a function specified in one or more procedures in the flowchart and/or one or more blocks in the block diagram.

These computer program instructions may alternatively be loaded onto a computer or another programmable data processing device, so that a series of operations are performed on the computer or another programmable device to generate computer-implemented processing, and the instructions executed on the computer or another programmable device provide an operation for implementing a function specified in one or more procedures in the flowchart and/or one or more blocks in the block diagram.

It will be understood that, all products, such as the terminal and the computer program product in the foregoing flowcharts, that are controlled or configured to perform the processing methods in the flowcharts described in the method embodiments of the in-vehicle controller diagnostic method in this application fall within the scope of the related products described in this application.

Apparently, a person skilled in the art may make various modifications and variations to the in-vehicle controller diagnostic method and the related apparatus provided in this application without departing from the spirit and scope of this application. In this way, if these modifications and variations of this application fall within the scope of the claims in this application and equivalent technologies thereof, this application also intends to include these modifications and variations.

## Claims

1. An in-vehicle controller diagnostic method, wherein the method is applied to a master controller, and the method comprises:
obtaining at least one type of information, wherein the at least one type of information comprises at least one of the following: first packet data or at least one piece of second packet data, the first packet data is packet data generated by the master controller, and the at least one piece of second packet data is packet data received by the master controller from at least one sub-controller; and
generating diagnostic data according to the at least one type of information when a target condition is met.

2. The method according to claim 1, wherein that the target condition is met comprises: receiving a diagnostic request from a diagnostic device; and
after generating the diagnostic data according to the at least one type of information, the method further comprises:
sending the diagnostic data to the diagnostic device.

3. The method according to claim 2, wherein the diagnostic request comprises one or more of a data reading request, a fault code information reading request, a diagnostic information clearing request, an input/output control request, a data calibration request, and a routine control request.

4. The method according to claim 2 or 3, wherein when the diagnostic request is the data reading request, the at least one piece of second packet data is data sent by the at least one sub-controller to the master controller according to a first preset cycle, and the first packet data is data determined by the master controller according to the first preset cycle.

5. The method according to any one of claims 2 to 4, wherein when the diagnostic request is the fault code information reading request, the at least one piece of second packet data comprises fault code information sent to the master controller when a target sub-controller is faulty, the target sub-controller is a controller in the at least one sub-controller, and the first packet data is fault code information generated when the master controller is faulty.

6. The method according to any one of claims 2 to 5, wherein when the diagnostic request is the diagnostic information clearing request, the at least one piece of second packet data is clearing result feedback data that corresponds to the diagnostic information clearing request and that is returned to the master controller after the at least one sub-controller receives an execution instruction that corresponds to the diagnostic information clearing request and that is sent by the diagnostic device and forwarded by the master controller, and the first packet data is clearing result feedback data generated by the master controller according to the diagnostic information clearing request.

7. The method according to claim 6, wherein the execution instruction corresponding to the diagnostic information clearing request comprises a packet identifier corresponding to the diagnostic information clearing request.

8. The method according to any one of claims 2 to 7, wherein when the diagnostic request is the input/output control request, the at least one piece of second packet data is execution result feedback data that corresponds to the input/output control request and that is returned to the master controller after the at least one sub-controller receives an execution instruction that corresponds to the input/output control request and that is sent by the diagnostic device and forwarded by the master controller, and the first packet data is execution result feedback data generated by the master controller according to the input/output control request.

9. The method according to claim 8, wherein the execution instruction corresponding to the input/output control request comprises a packet identifier corresponding to the input/output control request.

10. The method according to any one of claims 2 to 9, wherein when the diagnostic request is the data calibration request, the at least one piece of second packet data is execution result feedback data that corresponds to the data calibration request and that is returned to the master controller after the at least one sub-controller receives an execution instruction that corresponds to the data calibration request and that is sent by the diagnostic device and forwarded by the master controller, and the first packet data is execution result feedback data generated by the master controller according to the data calibration request.

11. The method according to claim 10, wherein the execution instruction corresponding to the data calibration request comprises a packet identifier corresponding to the data calibration request.

12. The method according to any one of claims 2 to 11, wherein when the diagnostic request is the routine control request, the at least one piece of second packet data is execution result feedback data that corresponds to the routine control request and that is returned to the master controller after the at least one sub-controller receives an execution instruction that corresponds to the routine control request and that is sent by the diagnostic device and forwarded by the master controller, and the first packet data is execution result feedback data generated by the master controller according to the routine control request.

13. The method according to claim 12, wherein the execution instruction corresponding to the routine control request comprises a packet identifier corresponding to the routine control request.

14. The method according to any one of claims 1 to 13, wherein the master controller and the at least one sub-controller are located in the same network segment.

15. The method according to any one of claims 1 to 14, wherein the first packet data and the at least one piece of second packet data comprise different software and hardware version information and different packet identifiers of a dynamic data stream.

16. An in-vehicle controller diagnostic system, wherein the system comprises a diagnostic device (101), a master controller (103), and at least one sub-controller;
the at least one sub-controller is configured to send at least one piece of second packet data to the master controller;
the master controller is configured to obtain at least one type of information, wherein the at least one type of information comprises at least one of the following: first packet data or the at least one piece of second packet data, and the first packet data is generated by the master controller;
the diagnostic device is configured to send a diagnostic request to the master controller;
the master controller is further configured to generate diagnostic data according to the at least one type of information when receiving the diagnostic request; and
the master controller is further configured to send the diagnostic data to the diagnostic device.

17. An electronic apparatus (1600), comprising a processor (1601) and a memory (1602), wherein the processor is coupled to the memory, and the processor invokes executable program code stored in the memory to perform the method according to any one of claims 1 to 15.

18. A vehicle (1700), comprising the electronic apparatus (1600) according to claim 17.

19. A computer-readable storage medium, storing a computer program for exchanging electronic data, wherein the computer program enables a computer to perform the method according to any one of claims 1 to 15.
